# EUROPÄISCHE PATENTANMELDUNG

(11) **EP 0 551 971 A1**
(43) Veröffentlichungstag der Anmeldung: **21.07.1993**
(21) Anmeldenummer: 93250003.6
(22) Anmeldetag: 06.01.1993
(51) Int. Cl.: H02B 1/30, F16B 5/07

(54) **Anwendung eines Haftsystems**

(30) Priorität: 16.01.1992 DE 4201296
(71) Anmelder: SIEMENS AKTIENGESELLSCHAFT, D-80333 München (DE)
(72) Erfinder: Blum, Richard, W-6057 Dietzenbach (DE); Küster, Willi, W-6460 Gelnhausen (DE); Groh, Hans-Michael, W-6452 Hainburg 2 (DE); Herr, Klaus-Jürgen, Dipl.-Ing., W-6464 Linsengericht (DE)

(57) **Zusammenfassung**

Zur Befestigung von äußeren abdeckenden Bauteilen (22) eines Schaltschrankes (20) wird ein Haftsystem eingesetzt, das aus zwei aufeinanderlegbaren und an den zu verbindenden Bauteilen fest anzubringenden Bändern (26, 27) besteht. Vorzugsweise werden Haftsysteme ähnlich den bekannten Klettverschlüssen eingesetzt. Anwendbar sind solche Haftsysteme an Schaltschränken beispielsweise zur Befestigung von Seitenwänden, Sockelblenden und Zierblenden. Neben einer Vereinfachung bei der Befestigung solcher Teile wird bei guter Haltekraft ein günstiges Schwingungsverhalten und eine erhöhte Dichtigkeit erzielt.

## Beschreibung

### Anwendung eines Haftsystems

Zur Verbindung von Teilen von Kleidungsstücken oder von Schuhwerk sind textile Haftverschlüsse auf der Basis von Klettverschlußelementen bekannt. Ferner ist es bekannt, derartige Klettverschlußelemente auch zur Befestigung starrer Körper auf festen Unterlagen oder Wandflächen zu verwenden
(DE-A-40 12 613, DE-A-40 07 586).

Der Erfindung liegt die Aufgabe zugrunde, Teile elektrischer Schaltschränke oder aus solchen Schaltschränken bestehender Schaltanlagen rationeller zu befestigen, als dies bisher durch Schrauben, Drehriegel oder ähnliche Elemente erfolgt.

Gemäß der Erfindung wird diese Aufgabe durch Anwendung eines Haftsystems gelöst, bestehend aus zwei aufeinanderlegbaren streifenförmigen und an den zu verbindenden Bauteilen fest anzubringenden Bändern, die eine Vielzahl von flexiblen und miteinander lösbar haftend in Eingriff zu bringenden Elementen aufweisen, zur Befestigung von äußeren abdeckenden Bauteilen eines ein Gerüst aufweisenden Schaltschrankes. Über die Vereinfachung der Befestigung solcher Bauteile hinausgehend werden durch die Erfindung auch wesentliche technische Vorteile erreicht. Insbesondere wirkt die flächenhafte oder auch nur streifenförmige Befestigung der Bauteile einer Neigung zu Schwingungen entgegen, wie sie gerade in Schaltschränken oder Schaltanlagen unter dem Einfluß magnetischer Streufelder oder der vom Betrieb von Schaltgeräten ausgehenden Erschütterungen auftreten können. Ferner läßt sich bei geeigneter Anbringung der streifenförmigen Bänder des Haftsystems eine Abdichtung erzielen. Auch für eine elektrische Verbindung zwischen einem Schrank- oder Anlagengestell und abdeckenden Bauteilen kann gesorgt werden, wenn ein metallisiertes oder metallhaltiges oder auf eine andere Art leitfähig eingestelltes (z. B. durch Graphit) Haftsystem eingesetzt wird, wie dies beispielsweise durch die DE-A-34 03 258 bekannt geworden ist.

Im Rahmen der erfindungsgemäßen Anwendung kann das Bauteil beispielsweise eine Seitenwand, eine Rückwand oder ein Dachblech eines Schaltschrankes sein. Eine solche Seitenwand ist verhältnismäßig großflächig und bedarf daher bei dem üblichen Aufbau eines Schaltschrankes einer Vielzahl von Befestigungselementen. Diese können durch das Haftsystem vorteilhaft ersetzt werden.

Ferner kann im Rahmen der erfindungsgemäßen Anwendung das Bauteil eine einen Sockel des Schaltschrankes frontseitig verschließende Abdeckung sein. In diesem Fall wirkt es sich besonders günstig aus, daß die frontseitige Abdeckung ohne Lösen von Befestigungselementen abnehmbar ist, jedoch nur durch Aufbringen einer beträchtlichen Kraft.

Diese vorstehend erläuterten Anwendungen eines Haftsystems sind besonders in der Form vorteilhaft, daß das eine Band des Haftsystems nahe einem abgekanteten Rand des Bauteils und das zugehörige weitere Band an gegenüberliegenden Teilflächen mehrfach abgewinkelter, einen Rahmen bildender Gerüstelemente befestigt ist. Ein Beispiel für ein geeignetes Gerüstelement ist der DE-A-39 20 353 zu entnehmen.

Ferner ist das Haftsystem in der Weise einsetzbar, daß das Bauteil eine die Frontseite einer Tür des Schaltschrankes teilweise abdeckende Blende ist. In diesem Zusammenhang kann die Blende im Querschnitt winkelförmig ausgebildet sein und das eine Band des Haftsystems kann an einer oberen Abkantung der Tür und das andere Band an einem auf der Abkantung aufliegenden Schenkel der Blende befestigt sein. Auf diese Weise ist es möglich, die Blende anzuheben, um eine darunter geschützt angebracht Beschriftung abzulesen. Beim Loslassen gelangt die Blende wieder in die Ausgangsstellung, in der die Beschriftung verdeckt ist.

In allen genannten Fällen ist es vorteilhaft, wenn die Gewichtskraft eines abdeckenden Bauteils durch formschlüssig zusammenwirkende Elemente des Bauteils und des Gerüstes des Schaltschrankes aufgenommen ist. Das Haftsystem wird auf diese Weise nur mit einer Haltekraft beansprucht.

Die Erfindung umfaßt ferner zwei Verfahren zur Anwendung eines Haftsystems der vorstehend erläuterten Art zur lösbaren Befestigung von Abdeckungen an dem Gerüst eines Schaltschrankes. Nach dem ersten dieser Verfahren sind folgende Schritte vorgesehen:
a) auf metallisch blanke Flächen von Blechteilen des Gerüstes wird ein korrosionsbeständiges Metallband mittels einer elektrisch leitenden selbstklebenden Haftschicht befestigt, wobei die gegenüberliegende Seite des Metallbandes durch eine abziehbare Schutzfolie bedeckt ist, die schmaler als das Metallband ist und zwei Randstreifen des Metallbandes freiläßt,
b) das Gerüst wird einschließlich der Metallbänder und ihrer Schutzfolien mit einer korrosionsbeständigen Beschichtung versehen,
c) die Verfahrensschritte a) und b) werden sinngemäß auf die an dem Gerüst anzubringenden Abdeckungen angewendet,
d) die Schutzfolien der Metallbänder mitsamt der darauf abgeschiedenen Beschichtung werden entfernt,
e) auf die Metallbänder werden die Bänder des Haftsystems mittels ihrer selbstklebenden Haftschichten aufgebracht,
f) die Abdeckungen werden durch Aufeinanderlegen der Bänder des Haftsystems an dem Gerüst befestigt.

Wesentlich ist hierbei die Herstellung einer durchgehenden elektrischen Verbindung von dem Gerüst über die Elemente des Haftsystems bis zu den Abdeckungen unter gleichzeitiger Einbeziehung der Metallbänder in den Korrosionsschutz des Gerüstes und der Abdeckungen.

Nach dem zweiten erwähnten Verfahren sind folgende Schritte vorgesehen:
a) auf metallisch blanke Flächen von Blechteilen des Gerüstes wird ein korrosionsbeständiges Metallband mittels einer elektrisch leitenden selbstklebenden Haftschicht befestigt,
b) auf das Metallband wird mittels einer elektrisch leitfähigen selbstklebenden Haftschicht ein Band des Haftsystems aufgebracht, wobei die eigentliche haftvermittelnde Schicht des Bandes schmaler als das Trägerband der haftvermittelnden Schicht und das Trägerband schmaler als das Metallband bemessen ist und wobei ferner die haftvermittelnde Schicht und anschließende Bereiche des Trägerbandes unter Freilassung von Randstreifen von einer Schutzfolie bedeckt sind,
c) das Gerüst wird einschließlich der darauf befindlichen Metallbänder und Bänder des Haftsystems mit einer korrosionsbeständigen Beschichtung versehen,
d) die Verfahrenschritte a), b) und c) werden sinngemäß auf dem Gerüst anzubringende Abdeckungen angewendet,
e) die Schutzfolien werden von den Bändern des Haftsystems abgezogen und
f) die Abdeckungen werden durch Aufeinanderlegen der Bänder des Haftsystems an dem Gerüst befestigt.

Hierbei werden nicht nur die Metallbänder, sondern auch die Trägerbänder des Haftsystems in den Korrosionsschutz einbezogen. Dies verbessert auch die Haltbarkeit der selbstklebenden Haftschichten zwischen dem Metallbändern und dem Gerüst bzw. einer Abdeckung und zwischen den Trägerbändern des Haftsystems und den Metallbändern, weil diese Haftschichten an den Rändern durch die Beschichtung versiegelt sind.

Die Erfindung wird im folgenden anhand der in den Figuren dargestellten Ausführungsbeispiele näher erläutert.

Die Figur 1 zeigt den seitlichen Bereich eines Schaltschrankes im Schnitt.

In der Figur 2 ist eine in der Figur 1 mit einem Kreis markierte Einzelheit vergrößert dargestellt.

Die Figur 3 zeigt einen Schaltschrank in einer perspektivischen Ansicht.

Die Figur 4 zeigt eine Blende für die Tür des Schaltschrankes gemäß der Figur 3 im hochgeklappten Zustand.

Die Figur 5 zeigt schematisch und vergrößert die Aufbringung eines Metallbandes auf ein Gerüst oder eine Abdeckung als Haftgrundlage für ein leitfähiges Haftsystems.

Die Figur 6 zeigt die Anordnung gemäß der Figur 1 bei dem Entfernen einer Schutzfolie.

In der Figur 7 ist gleichfalls schematisch und vergrößert die Aufbringung eines Metallbandes und eines Bandes eines Haftsystems auf ein Gerüst oder eine Abdeckung mit einer überdeckenden Lack- und Pulverbeschichtung dargestellt.

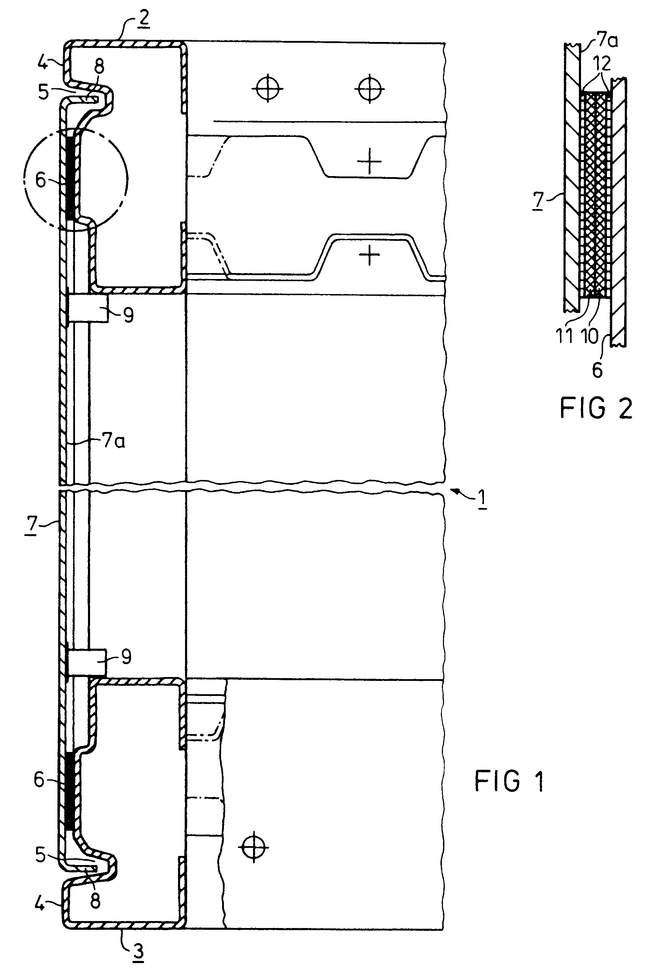

Der Schnitt durch den Seitenwandbereich eines Schaltschrankes 1 ist in der Figur 1 durch eine Unterbrechung in der Höhe verkürzt dargestellt. Ein oberes Gerüstelement 2 und ein unteres, spiegelbildliches Gerüstelement 3 entsprechen in der Profilierung den in der DE-A-39 20 353 beschriebenen Gerüstelementen. Wie man erkennt, weisen die Gerüstelemente 2 und 3 ausgehend von einer äußeren Teilfläche 4 eine Einziehung 5 und eine gegenüber der Teilfläche 4 zurückgesetzt angeordnete weitere Teilfläche 6 auf. Auf den Gerüstelementen 2 und 3 liegt als abdeckendes äußeres Bauelement eine Seitenwand 7 auf, deren abgekantete Ränder 8 in die Einziehungen 5 eintauchen. An der Innenseite der Seitenwand 7 befestigte Fortsätze, insbesondere die gezeigten Schweißbolzen 9, zentrieren die Seitenwand 7 gegenüber den Gerüstelementen und stützen die Gewichtskraft ab. Auf den Teilflächen 6 der Gerüstelemente 2 und 3 und den gegenüberliegenden Innenflächen 7a der Abdeckung 7 sind die Bänder eines Haftsystems angebracht. Anhand des in der Figur 2 vergrößert dargestellten Bereiches, der in der Figur 1 mit einem strichpunktierten Kreis umgeben ist, läßt sich der Aufbau des Haftsystems näher entnehmen. Wie man erkennt, ist auf der Teilfläche 6 ein Band 10 und auf der gegenüberliegenden Fläche der Seitenwand 7 ein Band 11 angebracht. Es handelt sich dabei vorzugsweise um die streifenförmigen Bänder eines an sich bekannten Haftsystems nach dem Prinzip der Klettbänder. Hierbei ist es grundsätzlich gleichgültig, an welchem der Teile der Schlaufenteil und an welchem Teil der Verhakungsteil angebracht ist. Die Befestigung der Bänder 10 und 11 erfolgt gleichfalls in bekannter Weise mittels selbstklebender Haftschichten. Solche Haftschichten 12 sind in der Figur 2 schematisch dargestellt.

Bei geeigneter, ununterbrochener Anordnung der Bänder 10 und 11 am gesamten Umfang der Seitenwand 7 wird neben der Befestigung auch eine gute Staubdichtigkeit sowie eine Abdichtung gegen Wasser erzielt. Die Neigung der Seitenwand 7 zu Schwingungen wird gegenüber einer üblichen Befestigung mit Schrauben bedeutend vermindert. Wird ein Haftsystem aus metallisierten oder mit Metallfäden versehenen Bändern 10 und 11 verwendet, so wird bei Anbringung der Seitenwand 7 zwangsläufig auch eine elektrisch leitende Verbindung mit dem Gerüst des Schaltschrankes 1 hergestellt, was bei Schaltschränken aus Gründen des Berührungsschutzes erwünscht ist.

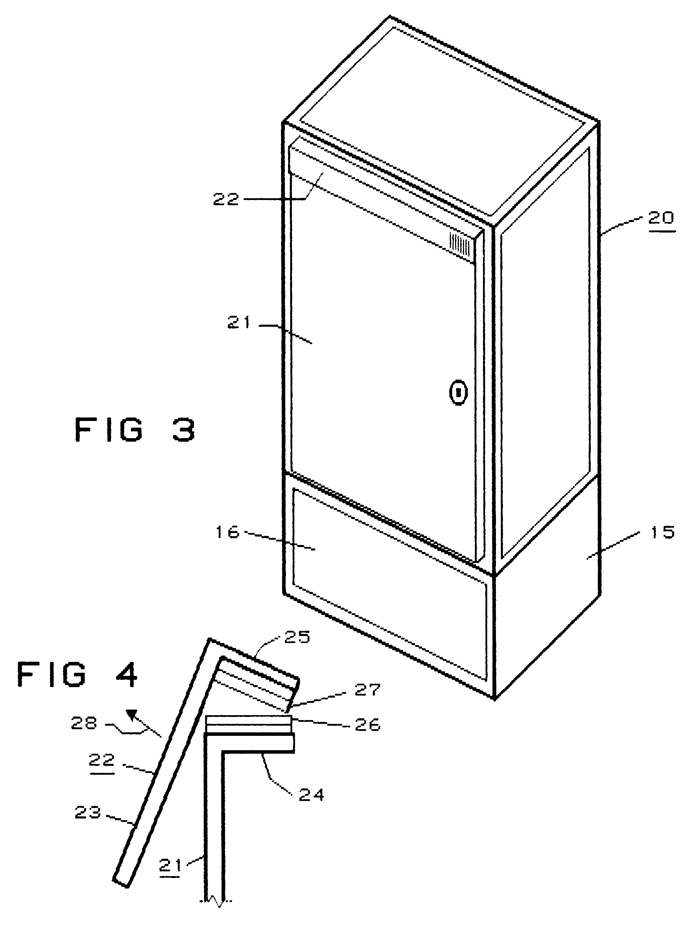

Eine den Figuren 1 und 2 entsprechende Anordnung kann sinngemäß auch zur Befestigung einer frontseitigen Sockelblende eines Schaltschrankes benutzt werden. Unterschiedlich gegenüber der Anwendung im Bereich der Seitenwand des Schaltschrankes sind dabei lediglich die Abmessungen und die Lage der Teile. Eine Sockelblende 16 ist in der Figur 3 gezeigt.

Der mechanische Widerstand gegen eine Abnahme der Seitenwände oder sonstigen abdeckenden Bauteile ist beträchtlich. Eine unbeabsichtigte Lösung durch betriebliche Einflüsse oder durch eine normale Handhabung eines Schaltschrankes oder einer Schaltanlage ist hierdurch ausgeschlossen. Vielmehr bedarf es der Anwendung spezieller Werkzeuge, um die Abdeckungen zu lösen. Beispielsweise kann ein Werkzeug in den Spalt zwischen einer der Abkantungen 8 der Seitenwand 7 und einem der Gerüstelemente 2 bzw. 3 oder der in der Figur 1 nicht sichtbaren, die hintere bzw. vordere Begrenzung des in der Figur 1 gezeigten Schaltschrankes bildenden Gerüstelemente eingeführt werden. Durch Hebelwirkung läßt sich dann die Seitenwand 7 oder die Sockelblende 16 abdrücken. Ferner können runde oder speziell profilierte Öffnungen in der Seitenwand 7 zum Einführen eines Werkzeuges vorgesehen sein.

Zu den vorteilhaften Eigenschaften der beschriebenen Befestigung von Abdeckungen gehört insbesondere, daß die Außenfläche der Abdeckungen nicht durch Befestigungselemente unterbrochen ist. Dies wäre zwar auch bei einer Befestigung vom Inneren des Schaltschrankes her zu erreichen, jedoch nur mit großem Arbeitsaufwand aufgrund der ungünstigen Zugänglichkeit der Befestigungsstellen. Eine Abnahme in dieser Weise befestigter Abdeckteile wäre dann bei voll ausgebautem Schaltschrank nicht mehr möglich, weil kein Zugang zu den Befestigungselementen mehr besteht.

Gemäß der Figur 3 ist die Tür 21 eines Schaltschrankes 20 am oberen Rand mit einer Zierleiste 22 versehen, die selbst mit einer Beschriftung versehen sein kann und die gleichzeitig zum Schutz einer auf der Tür 21 angebrachten Beschriftung, z. B. eines Typenschildes dienen kann. Wie die Figur 4 zeigt, ist die Zierleiste 22 winkelförmig ausgebildet und besitzt dementsprechend einen frontseitigen Schenkel 23 und einen zur Auflage auf einer Abkantung 24 der Tür 21 vorgesehenen Schenkel 25. An der Abkantung 24 und der gegenüberliegenden Innenseite des Schenkels 25 der Zierleiste 22 sind die Bänder 26 und 27 eines Haftsystems der beschriebenen Art angebracht. Dadurch ist es möglich, die Haftung durch Anheben der Zierleiste 22 in Richtung des Pfeiles 28 zu Lösen und die darunter angebrachte Beschriftung zu lesen. Beim Loslassen gelangt die Zierleiste 22 scharnierartig in ihre Ausgangslage, in der die auf der Tür 21 befindliche Beschriftung abgedeckt ist.

Wie bereits erwähnt, kann es erwünscht sein, daß Abdeckteile eines Schaltschrankes beim Ansetzen an das Gerüst ohne jede zusätzliche Maßnahme in elektrisch leitende Verbindung mit dem Gerüst gelangen. Zwar sind Hafsysteme mit leitfähigen Bändern und leitfähigen selbstklebenden Haftschichten bekannt, doch wird durch die Anwendung nicht unmittelbar die gewünschte leitende Verbindung erzielt. Dies hängt mit dem notwendigen Korrosionsschutz der Gerüste und Abdeckteile zusammen, der nicht nur örtlich aufgebracht werden kann. Vielmehr ist es erforderlich, Gerüste und Abdeckungen als Ganzes zu lackieren oder mit einer Pulverbeschichtung zu versehen. Diese Beschichtungen verhindern das Entstehen einer elektrisch leitfähigen Verbindung zwischen dem Gerüst oder der Abdeckung und leitfähigen Bändern eines Haftsystems. Im folgenden werden zwei Verfahren beschrieben, mit denen diese Schwierigkeiten behoben werden.

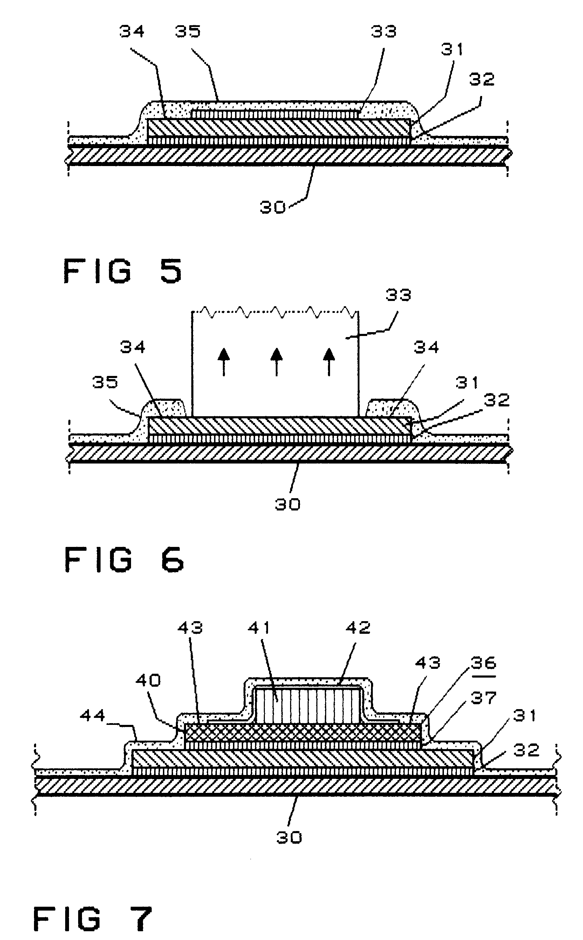

Zur Erläuterung des ersten der beiden Verfahren wird auf die Figuren 5 und 6 verwiesen, in denen ein Blechteil 30 gezeigt ist, das Bestandteil eines Gerüstes oder einer Abdeckung sein kann.

Auf das zunächst metallisch blanke Blechteil 30 wird ein dünnes Metallband 31 aufgebracht, z. B. ein verzinntes dünnes Kupferband. Eine elektrisch leitende selbstklebende Haftschicht 32 befestigt das Metallband 31 und sorgt zugleich für die elektrische Verbindung mit dem Blechteil 30. Auf der Außenseite ist das Metallband mit einer abziehbaren Schutzfolie 33 bedeckt. Die Schutzfolie 33 ist schmaler als das Metallband 31, so daß Randstreifen 34 unbedeckt bleiben. Wird nun die beschriebene Anordnung mit einer korrosionsbeständigen Beschichtung 35 der erwähnten Art versehen, so werden auch das Metallband 31 und seine Schutzfolie 33 von der Beschichtung 35 bedeckt, wie dies die Figur 5 zeigt.

In einem weiteren Schritt kann nun die Schutzfolie 33 abgezogen werden, wobei die Beschichtung 35 aufreißt. Die Randstreifen 34 des Metallbandes 31 bleiben jedoch von der Beschichtung 35 bedeckt, so daß insbesondere die seitlich freiliegenden Bereiche der Haftschicht 32 und die darunter befindliche blanke Metallfläche des Blechteiles 30 geschützt bleiben. Diesen Zustand zeigt die Figur 6.

Bei dem anhand der Figur 7 zu erläuternden zweiten Verfahren ist eine noch weitergehende Integration der Komponenten des Haftsystems vorgesehen. Übereinstimmend mit der Figur 5 wird zunächst ein Metallband 31 mittels einer selbstklebenden Haftschicht 32 auf der blanken Metallfläche des Blechteiles 30 angebracht. Auf das Metallband 31 wird nun ein Band 36 eines leitfähigen Haftsystems aufgebracht, und zwar mittels einer weiteren selbstklebenden leitfähigen Haftschicht 37. Wesentlich für das Band 36 ist ein Trägerband 40, das breiter als die eigentliche haftvermittelnde Schicht 41 bemessen ist. Ferner ist die haftvermittelnde Schicht 41 durch eine Schutzfolie 42 bedeckt, die bis zu dem Trägerband 40 hinabreicht, jedoch Randstreifen 43 desselben freiläßt. Bei der anschließenden Beschichtung entsteht eine durchgehende Schicht 44, die durch Abziehen der Schutzfolie 42 örtlich entfernt werden kann. Hierdurch wird im wesentlichen nur die haftvermittelnde Schicht 41 des Bandes 36 freigelegt. Die Übergänge von dem Blechteil 30 zu dem Metallband 31 und von diesem zu dem Trägerband 40 bleiben gegen korrosive und sonstige Einflüsse geschützt.

Nach dem beschriebenen Abziehen der Schutzfolie 37 können entsprechend ausgerüstete Teile eines Schaltschrankes lösbar zusammengefügt werden.

## Patentansprüche

1. Anwendung eines Haftsystems, bestehend aus zwei aufeinanderlegbaren streifenförmigen und an zu verbindenden Bauteilen (2, 3, 7; 21, 22) fest anzubringenden Bändern (10, 11; 26, 27), die eine Vielzahl von flexiblen und miteinander lösbar haftend in Eingriff zu bringenden Elementen aufweisen, zur Befestigung von äußeren abdeckenden Bauteilen (7; 22) eines ein Gerüst aufweisenden Schaltschrankes (1; 20).

2. Anwendung nach Anspruch 1, **dadurch gekennzeichnet,** daß das Bauteil eine Seitenwand (7) eines Schaltschrankes (1) ist.

3. Anwendung nach Anspruch 1, **dadurch gekennzeichnet,** daß das Bauteil eine einen Sockel (15) des Schaltschrankes (20) frontseitig verschließende Abdeckung (16) ist.

4. Anwendung nach Anspruch 2 oder 3, **dadurch gekennzeichnet,** daß das eine Band (11) des Haftsystems nahe einem abgekanteten Rand (8) des Bauteils (7) und das zugehörige weitere Band (10) an gegenüberliegenden Teilflächen (6) mehrfach abgewinkelter, einen Rahmen bildender Gerüstelemente (2, 3) befestigt ist.

5. Anwendung nach Anspruch 1, **dadurch gekennzeichnet,** daß das Bauteil eine die Frontseite einer Tür (21) des Schaltschrankes (20) teilweise abdeckende Blende (22) ist.

6. Anwendung nach Anspruch 5, **dadurch gekennzeichnet,** daß die Blende (22) im Querschnitt winkelförmig ausgebildet ist und daß das eine Band (26) des Haftsystems an einer oberen Abkantung (24) der Tür (21) und das andere Band (27) an einem auf der Abkantung (24) aufliegenden Schenkel (25) der Blende (22) befestigt ist.

7. Anwendung nach Anspruch 1, **dadurch gekennzeichnet,** daß die Gewichtskraft eines abdeckenden Bauteils durch formschlüssig zusammenwirkende Elemente (9) des Bauteils (7) und des Gerüstes (2, 3) des Schaltschrankes (1) aufgenommen ist.

8. Verfahren zur Anwendung eines Haftsystems nach Art eines Klettverschlusses bei einem ein Gerüst aufweisenden Schaltschrank zur lösbaren Befestigung von äußeren Abdeckungen, mit folgenden Schritten:
a) auf metallisch blanke Flächen von Blechteilen (30) des Gerüstes wird ein korrosionsbeständiges Metallband (31) mittels einer elektrisch leitenden selbstklebenden Haftschicht (32) befestigt, wobei die gegenüberliegende Seite des Metallbandes (31) durch eine abziehbare Schutzfolie (33) bedeckt ist, die schmaler als das Metallband (31) ist und zwei Randstreifen (34) des Metallbandes (31) freiläßt,
b) das Gerüst wird einschließlich der Metallbänder (31) und ihrer Schutzfolien (33) mit einer korrosionsbeständigen beschichtung (35) versehen,
c) die Verfahrensschritte a) und b) werden sinngemäß auf die an dem Gerüst anzubringenden Abdeckungen angewendet,
d) die Schutzfolien (33) der Metallbänder (31) mitsamt der darauf abgeschiedenen Beschichtung (35) werden entfernt,
e) auf die Metallbänder (31) werden die Bänder des Haftsystems mittels ihrer selbstklebenden Haftschichten aufgebracht,
f) die Abdeckungen werden durch Aufeinanderlegen der Bänder des Haftsystems an dem Gerüst befestigt.

9. Verfahren zur Anwendung eines Haftsystems nach Art eines Klettverschlusses bei einem ein Gerüst aufweisenden Schaltschrank zur lösbaren Befestigung von äußeren Abdeckungen, mit folgenden Schritten:
a) auf metallisch blanke Flächen von Blechteilen (30) des Gerüstes wird ein korrosionsbeständiges Metallband (31) mittels einer elektrisch leitenden selbstklebenden Haftschicht (32) befestigt,
b) auf das Metallband (31) wird mittels einer elektrisch leitfähigen selbstklebenden Haftschicht (37) ein Band (36) des Haftsystems aufgebracht, wobei die eigentliche haftvermittelnde Schicht (41) des Bandes (36) schmaler als das Trägerband (40) der haftvermittelnden Schicht (41) und das Trägerband (40) schmaler als das Metallband (31) bemessen ist und wobei ferner die haftvermittelnde Schicht (41) und anschließende Bereiche des Trägerbandes (40) unter Freilassung von Randstreifen (43) von einer Schutzfolie (42) bedeckt sind,
c) das Gerüst wird einschließlich der darauf befindlichen Metallbänder (31) und Bänder (36) des Haftsystems mit einer korrosionsbeständigen Beschichtung (44) versehen,
d) die Verfahrabschnitte a), b) und c) werden sinngemäß auf dem Gerüst anzubringende Abdeckungen angewendet,
e) die Schutzfolien (42) werden von den Bändern (36) des Haftsystems abgezogen und
f) die Abdeckungen werden durch Aufeinanderlegen der Bänder (36) des Haftsystems an dem Gerüst befestigt.
